# EUROPEAN PATENT APPLICATION

(11) **EP 4 604 269 A1**
(43) Date of publication of application: **20.08.2025**
(21) Application number: 24157870.7
(22) Date of filing: 15.02.2024
(51) Int. Cl.: H01M 10/613, H01M 10/625, H01M 10/6568, G01M 3/04, G01M 3/18

(54) **A COOLING SYSTEM FOR A BATTERY PACK**

(71) Applicant: VOLVO TRUCK CORPORATION, 405 08 Göteborg (SE)
(72) Inventor: Ahmed, Istaq, 422 44 Göteborg (SE); Hirche, Mark, 425 41 Hisings Kärra (SE); Prado Barbieri, Romulo, 422 55 Hisings Backa (SE); Davidsson, Anton, 412 57 Göteborg (SE)
(74) Representative: Kransell & Wennborg KB

(57) **Abstract**

A cooling system (100) for a battery pack (200), e.g. of a vehicle, comprising:
- a liquid coolant supply conduit (101),
- a cooling conduit (102) configured to carry a liquid coolant for cooling of the battery pack, wherein the cooling conduit is configured to be fluidly connected to the liquid coolant supply conduit at a joint (103), such that liquid coolant can pass between the liquid coolant supply conduit and the cooling conduit via an interior (104) of the joint,
- a monitoring circuit (120) comprising an electrically conducting device (121) disposed externally of the j oint, wherein the monitoring circuit is configured to detect a leak of the liquid coolant at the joint via the electrically conducting device, such as by the electrically conducting device comprising a discontinuity (122) configured to be overbridged by a liquid coolant droplet leaking from the joint.

## Description

### TECHNICAL FIELD

The disclosure relates generally to cooling of battery packs. In particular aspects, the disclosure relates to a cooling system for a battery pack, a battery pack, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure can also be applied in stationary implementations, such as in a building or in stationary machinery.

### BACKGROUND

In electrically operated vehicles, battery packs provide electrical power for driving the vehicle. To dissipate heat generated in battery cells of the battery packs, it is necessary to provide a cooling system. Liquid cooling systems are commonly used for this purpose, wherein at least some cooling conduits carrying liquid coolant are typically located inside the battery pack to provide efficient cooling. There is hence a risk that liquid coolant leakage occurs inside the battery pack, which may cause a thermal runaway event of the battery pack. It is therefore desirable to quickly detect any leakages occurring within the battery pack.

### SUMMARY

According to a first aspect of the disclosure, a cooling system for a battery pack is provided. The cooling system comprises:
- a liquid coolant supply conduit,
- a cooling conduit configured to carry a liquid coolant for cooling of the battery pack, wherein the cooling conduit is configured to be fluidly connected to the liquid coolant supply conduit at a joint, such that liquid coolant can pass between the liquid coolant supply conduit and the cooling conduit via an interior of the j oint, and
- a monitoring circuit comprising an electrically conducting device disposed externally of the j oint, wherein the monitoring circuit is configured to detect a leak of the liquid coolant at the joint via the electrically conducting device.

The first aspect of the disclosure may seek to provide a cooling system for a battery pack that is in at least some aspect improved with respect to known cooling systems. In particular, the first aspect may seek to provide a cooling system for a battery pack in which detection of liquid coolant leaks within the battery pack can be efficiently detected as soon as possible. A technical benefit of providing the electrically conducting device disposed externally of the j oint, wherein the monitoring circuit is configured to detect a leak of the liquid coolant at the joint via the electrically conducting device, may include that coolant leaks at the joint can be quickly detected. The monitoring circuit enables fast detection of a leak occurring due to, e.g., loosening of a cooling system connection located within the battery pack, i.e., at the joint, due to vibration and/or manufacturing defects.

Optionally in some examples, including in at least one preferred example, the electrically conducting device comprises a discontinuity configured to be overbridged by a liquid coolant droplet leaking from the joint. A technical benefit may include a quick and accurate detection of leakage since the liquid coolant droplet, upon leakage, overbridges the discontinuity and allows detection of the leak.

Optionally in some examples, including in at least one preferred example, the monitoring circuit is configured such that, when no liquid coolant droplet overbridges the discontinuity, the monitoring circuit is open, and when the liquid coolant droplet overbridges the discontinuity, the monitoring circuit is closed. This means that a current can pass through the monitoring circuit as soon as the liquid coolant droplet overbridges the discontinuity, but no current can pass through the monitoring circuit in the absence of leakage. A technical benefit may include that leakage can be detected at a very early stage, before it has caused damage to the battery pack.

Optionally in some examples, including in at least one preferred example, the discontinuity extends around an outer circumference of the joint and is configured such that a liquid coolant droplet leaking from any location of the joint around the outer circumference will overbridge the discontinuity. A technical benefit may include fast and efficient detection of leakage from the joint.

Optionally in some examples, including in at least one preferred example, the electrically conducting device comprises a first electrically conducting wire electrically connected to a first terminal of the monitoring circuit, and a second electrically conducting wire connected to a second terminal of the monitoring circuit, wherein the discontinuity is a gap between the first electrically conducting wire and the second electrically conducting wire.

Optionally in some examples, including in at least one preferred example, the first electrically conducting wire comprises a first annular wire portion and the second electrically conducting wire comprises a second annular wire portion, the first and second annular portions being separated by the gap. A technical benefit may include fast and efficient detection of leakage from any location along the annular wire portions. The annular wire portions may preferably be arranged such that they are on different sides of a location at the joint where a leak is likely to occur.

Optionally in some examples, including in at least one preferred example, one of the first and second annular wire portions is arranged around the cooling conduit and the other one of the first and second annular wire portions is arranged around the liquid coolant supply conduit, or around a connecting device at which the joint is provided. A technical benefit may include fast and accurate detection of a leak occurring between the cooling conduit and the liquid coolant supply conduit, or the connecting device.

Optionally in some examples, including in at least one preferred example, the first and second annular wire portions are arranged such that the gap can be overbridged by the liquid coolant droplet at any location around an outer circumference of the joint. A technical benefit may include fast detection of a leak at the joint.

Optionally in some examples, including in at least one preferred example, the discontinuity has a width of 0.1-6 mm, preferably 0.5-5 mm, more preferably 0.5-3 mm. The size of the discontinuity, such as the gap, may be adapted to the type of liquid coolant used in the cooling system. The discontinuity should preferably be sufficiently wide not to be overbridged by accident, but small enough to be overbridged by a leaking liquid coolant droplet to close the monitoring circuit.

Optionally in some examples, including in at least one preferred example, the liquid coolant has a higher electrical conductivity as measured at a temperature of 20°C than condensed water. At room temperature, the liquid coolant may have a significantly higher electrical conductivity than condensed water. Thereby, a leaking liquid coolant droplet will lead to a higher current in the monitoring circuit than a water droplet arising due to, e.g., condensation.

Optionally in some examples, including in at least one preferred example, the liquid coolant comprises ethylene glycol, such as a mixture of ethylene glycol and distilled water. The liquid coolant may in other examples comprise propylene glycol, or oil, or a dielectric fluid.

Optionally in some examples, including in at least one preferred example, at least a portion of the electrically conducting device is arranged in direct contact with an external surface of the j oint. A technical benefit may include a robust arrangement by which leaks can be detected as soon as they occur.

Optionally in some examples, including in at least one preferred example, the cooling system comprises a plurality of joints, each joint providing a fluid connection between two fluid conduits of the cooling system, wherein the monitoring circuit is configured to individually detect leaks at each one of the joints. A technical benefit may include the possibility to determine where in the cooling system the leak occurs, i.e., at which joint. The two fluid conduits may be any two conduits within the cooling system that carries the liquid coolant, such as the cooling conduit and/or the liquid coolant supply conduit referred to above and a liquid coolant return conduit. The cooling system may comprise a plurality of such fluid conduits, depending on, e.g., the configuration of the battery pack.

Optionally in some examples, including in at least one preferred example, the monitoring circuit comprises a plurality of electrically conducting devices, each electrically conducting device being disposed externally of a respective one of the joints, wherein the monitoring circuit is configured to detect a leak of the liquid coolant at any one of the joints via the plurality of electrically conducting devices. Each one of the electrically conducting devices may be configured as described above. A technical benefit may include the possibility to determine where in the cooling system the leak occurs, thereby facilitating troubleshooting and reducing down-time.

Optionally in some examples, including in at least one preferred example, the monitoring circuit is configured to trigger an alarm signal in response to the detection of the leak. A technical benefit may include the ability to warn a user and/or another vehicle system that a leak has occurred in the battery pack, such that appropriate action may be taken.

According to a second aspect of the disclosure, a battery pack comprising the cooling system according to the first aspect is provided, wherein the cooling conduit is configured for cooling of at least one battery cell of the battery pack. The battery pack may be a battery pack for an electric vehicle, such as a partly or fully electric vehicle. The second aspect of the disclosure may seek to provide an in at least some aspect improved battery pack. In particular, the second aspect may seek to provide a battery pack in which a leak may be quickly and efficiently detected. A technical benefit may include an early detection of leaks within the battery pack, thereby preventing thermal runaway events. Advantageous examples and further technical benefits of the battery pack appear from the above description of the cooling system.

Optionally in some examples, including in at least one preferred example, the battery pack comprises a plurality of battery cells, wherein the cooling system comprises a plurality of cooling conduits, each cooling conduit being configured for cooling of at least one battery cell of the plurality of battery cells, and wherein each cooling conduit is fluidly connected to the liquid coolant supply conduit at a respective joint. The battery cells may be arranged in battery modules, wherein each cooling conduit is configured for cooling one of the battery modules.

According to a third aspect of the disclosure, a vehicle comprising the battery pack according to the second aspect is provided. The vehicle may be an at least partially electrically operated vehicle, such as a fully electric vehicle or a hybrid vehicle comprising a fuel cell and/or a combustion engine in addition to the battery pack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary battery pack according to an example.
**FIG. 3** shows parts of a cooling system according to an example.
**FIG. 4** shows parts of a cooling system according to an example.
**FIG. 5** shows a battery pack according to an example.

The drawings are schematic and not drawn to scale.

### DETAILED DESCRIPTION

The detailed description set forth below provides information and examples of the disclosed technology with sufficient detail to enable those skilled in the art to practice the disclosure.

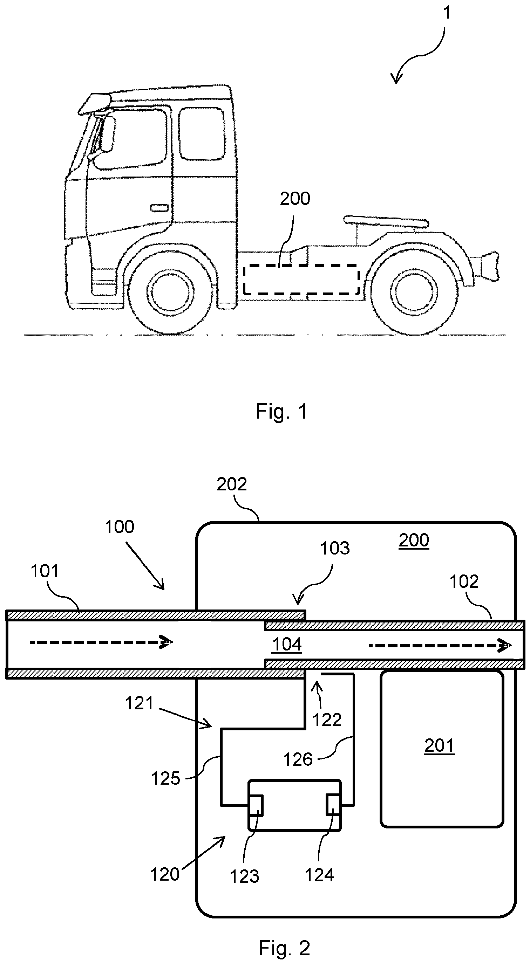

**FIG. 1** illustrates a vehicle 1 in the form of a heavy-duty towing truck. The vehicle 1 comprises a battery pack 200 configured to provide propulsion power to one or more electric motors (not shown) driving the vehicle 1. The battery pack 200 comprises a plurality of rechargeable battery cells (now shown in FIG. 1), e.g. lithium-ion battery cells. The battery cells may be grouped together and connected in series and/or in parallel in battery modules, wherein the battery pack 200 may comprise one or more such battery modules. Apart from the battery cells, the battery pack may comprise a battery management system for controlling the battery. The battery pack 200 further comprises a cooling system (not shown in FIG. 1) configured to dissipate heat generated by the battery cells. When the cooling system is a liquid cooling system, there is a risk that liquid coolant leakage occurs inside a housing of the battery pack 200. In particular, the cooling system may comprise locations at which leakages are more likely to occur, such as joints that fluidly connect two fluid conduits. Such joints may be located inside a housing of the battery pack 200. Any leakages of liquid coolant occurring within the battery pack 200 therefore need to be detected quickly such that appropriate actions may be taken.

**FIG. 2** is a schematic overview of an exemplary battery pack 200, such as of a vehicle 1 shown in FIG. 1, or of a stationary unit, such as of a stationary machinery. The battery pack 200 comprises a plurality of battery cells, although a single battery cell 201 is depicted in FIG. 2, arranged in a housing 202. The battery pack further comprises a cooling system 100 in the form of a liquid cooling system configured to cool the battery cells of the battery pack 200. It comprises a liquid coolant supply conduit 101 via which liquid coolant is supplied to the battery pack 200. The liquid coolant supply conduit 101 may be fluidly connected to a pump or similar (not shown) and one or more heat exchangers (now shown) may be provided for cooling of the liquid coolant provided to the battery pack 200 via the liquid coolant supply conduit 101.

The cooling system 100 further comprises a cooling conduit 102 configured to carry the liquid coolant for cooling of the battery pack 200, herein for cooling of the battery cell 201. The cooling conduit 102 is configured to be fluidly connected to the liquid coolant supply conduit 101 at a joint 103, such that liquid coolant can pass between the liquid coolant supply conduit 101 and the cooling conduit 102 via an interior 104 of the joint 103. Although not illustrated in FIG. 2, the cooling system 100 may further be configured to return the liquid coolant from the cooling conduit 102 to the liquid coolant supply conduit 101 via the one or more heat exchangers, e.g., using the pump.

A monitoring circuit 120 configured to detect a leak of the liquid coolant at the joint 103 is further provided. The monitoring circuit 120 comprises an electrically conducting device 121 disposed externally of the joint 103. It is configured to detect the leak at the joint 103 via the electrically conducting device 121. For this purpose, the electrically conducting device comprises a discontinuity 122 configured to be overbridged by a liquid coolant droplet (not shown in FIG. 2) leaking from the joint 103. The monitoring circuit 120 is in the illustrated example configured such that, when no liquid coolant droplet overbridges the discontinuity 122, the monitoring circuit 120 is open, and when the liquid coolant droplet overbridges the discontinuity 122, the monitoring circuit 120 is closed. Thus, the monitoring circuit 120 will detect a leakage when it is closed by the liquid coolant droplet.

In the illustrated example, the electrically conducting device 121 comprises a first electrically conducting wire 125 electrically connected to a first terminal 123 of the monitoring circuit 120, and a second electrically conducting wire 126 connected to a second terminal 124 of the monitoring circuit 120. The discontinuity 122 is a gap between the first electrically conducting wire 125 and the second electrically conducting wire 126 in an area around the joint 103. If a liquid coolant drop leaks from the joint 103, it will close the gap between the first electrically conducting wire 125 and the second electrically conducting wire 126 such that a current may pass between the terminals 123, 124 via the electrically conducting device 121 and the liquid coolant drop.

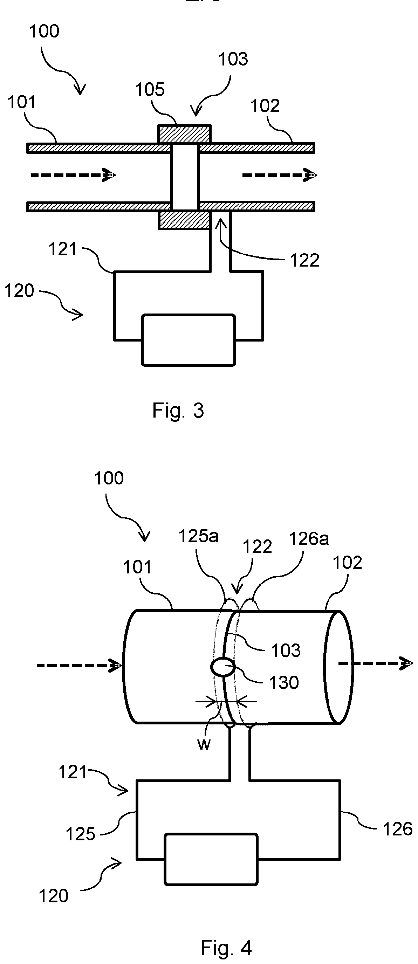

**FIG. 3** illustrates parts of a cooling system 100 according to an example in which a connecting device 105, such as a screw connector, or a quick-release connector, or any other kind of known fluid connector, is provided for fluidly connecting the cooling conduit 102 to the liquid coolant supply conduit 101. The electrically conducting device 121 is arranged such that a liquid coolant drop leaking from the connecting device 105 will overbridge the discontinuity 122 and be detected by the monitoring circuit 120.

**FIG. 4** illustrates a cooling system 100 in which the discontinuity 122 extends around an outer circumference of the joint 103 and is configured such that a liquid coolant droplet 130 leaking from any location of the joint 103 around the outer circumference will overbridge the discontinuity 122. This is achieved by providing the first electrically conducting wire 125 with a first annular wire portion 125a and the second electrically conducting wire 126 with a second annular wire portion 126a. The first and second annular wire portions 125a, 126a are separated by the discontinuity 122. In the illustrated example, the first and second annular wire portions 125a, 126a are provided on opposite sides of the joint 103 and extend around an outer circumference of the liquid coolant supply conduit 101 and the cooling conduit 102, respectively. However, in other examples, the first and second annular wire portions 125a, 126a may both be provided on the same side of the joint 103, depending on e.g. an orientation of the cooling conduit 102 and the liquid coolant supply conduit 101 and on a configuration of the joint 103. Gravity and other external forces that may affect liquid leaking from the joint 103 may be taken into account when the electrically conducting device 121 and the discontinuity 122 are arranged with respect to the joint. As understood by the person skilled in the art, the first and second annular wire portions 125a, 126a may be in contact with the component(s) on which they are arranged. For example, they may be arranged in contact with the liquid coolant supply conduit 101 and the cooling conduit 102, respectively. The annular wire portions 125a, 126a may for example be achieved by winding the wires 125, 126 around the respective component such that a gap is provided between the annular wire portions 125a, 126a.

In other examples, the first electrically conducting wire 125 and the second electrically conducting wire 126 may each comprise an extended, but not annular, wire portion, such that the discontinuity 122 extends around a portion of the joint 103.

A width w of the discontinuity 122 may be selected depending on, e.g., physical properties of the liquid coolant, such as electrical conductivity, surface tension, and viscosity, as well as material properties of the component(s) onto which liquid coolant is expected to leak from the joint 103. The discontinuity 122 may, by way of example, have a width w of 0.1-6 mm, preferably 0.5-5 mm, more preferably 0.5-3 mm.

The monitoring circuit 120 may comprise electronic circuitry configured to trigger an alarm signal in response to the detection of the leak, for example, an alarm signal sent via a wired or a wireless network to a battery management system (not shown) of the battery pack 200, and/or to a control unit of the vehicle 1 in which the battery pack 200 is provided.

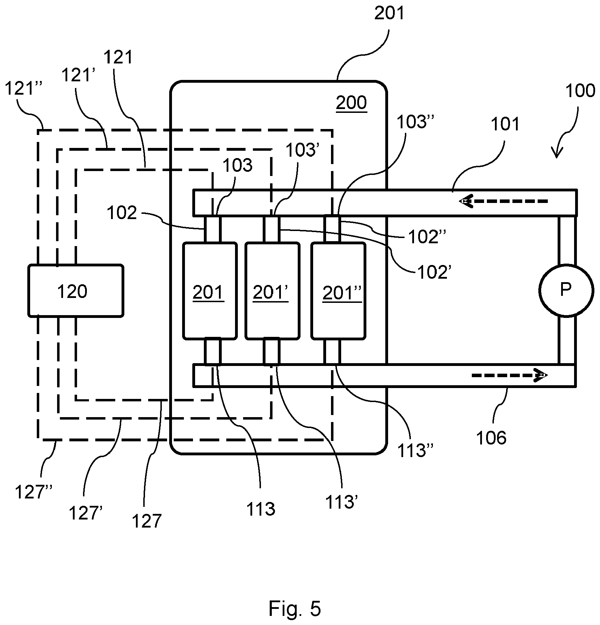

**FIG. 5** schematically shows a battery pack 200 according to an example of the disclosure. The battery pack 200 comprises several battery cells, herein illustrated as three battery cells 201, 201', 201", arranged in a housing 201. The battery pack 200 further comprises a cooling system 100 comprising a liquid coolant supply conduit 101 and a liquid coolant return conduit 106, fluidly connected via a pump P and via cooling conduits 102, 102', 102", each cooling conduit 102, 102', 102" being arranged for cooling one of the battery cells 201, 201', 201". The pump P is arranged to circulate liquid coolant through the cooling system 100 via a heat exchanger (not shown). Cooled liquid coolant is pumped through the liquid coolant supply conduit 101 to each one of the cooling conduits 102, 102', 102" via first joints 103, 103', 103", and further to the liquid coolant return conduit 106 via second joints 113, 113', 113". A monitoring circuit 120 is arranged for individually detecting leaks of liquid coolant occurring at each one of the first joints 103, 103', 103" via first electrically conducting devices 121, 121', 121", and at each one of the second joints 113, 113', 113" via second electrically conducting devices 127, 127', 127". Each one of the first and second electrically conducting devices 121, 121', 121", 127, 127', 127" may be configured as described above with reference to FIGS. 2-4.

Although the cooling system 100 and the battery pack 200 as disclosed herein are described with respect to their use in a vehicle 1, they may be applied also in other applications, such as in other types of vehicles than the heavy-duty towing truck illustrated in FIG. 1, and/or in stationary units, such as in buildings and/or in any stationary machinery.

Below follows a list of numbered examples of a cooling system, a battery pack and a vehicle according to the disclosure.

Example 1: A cooling system (100) for a battery pack (200), the cooling system (100) comprising:
- a liquid coolant supply conduit (101),
- a cooling conduit (102) configured to carry a liquid coolant for cooling of the battery pack (200), wherein the cooling conduit (102) is configured to be fluidly connected to the liquid coolant supply conduit (101) at a joint (103), such that liquid coolant can pass between the liquid coolant supply conduit (101) and the cooling conduit (102) via an interior (104) of the joint (103), and
- a monitoring circuit (120) comprising an electrically conducting device (121) disposed externally of the joint (103), wherein the monitoring circuit (120) is configured to detect a leak of the liquid coolant at the joint (103) via the electrically conducting device (121).

Example 2. The cooling system of example 1, wherein the electrically conducting device (121) comprises a discontinuity (122) configured to be overbridged by a liquid coolant droplet (130) leaking from the joint (103).

Example 3. The cooling system of example 2, wherein the monitoring circuit (120) is configured such that, when no liquid coolant droplet (130) overbridges the discontinuity, the monitoring circuit (120) is open, and when the liquid coolant droplet (130) overbridges the discontinuity (122), the monitoring circuit (120) is closed.

Example 4. The cooling system of example 2 or 3, wherein the discontinuity (122) extends around an outer circumference of the joint (103) and is configured such that a liquid coolant droplet (10) leaking from any location of the joint (103) around the outer circumference will overbridge the discontinuity (122).

Example 5. The cooling system of any one of examples 2-4, wherein the electrically conducting device comprises a first electrically conducting wire (125) electrically connected to a first terminal (123) of the monitoring circuit (120), and a second electrically conducting wire (126) connected to a second terminal (124) of the monitoring circuit (120), and wherein the discontinuity (122) is a gap between the first electrically conducting wire (125) and the second electrically conducting wire (126).

Example 6. The cooling system of example 5, wherein the first electrically conducting wire (125) comprises a first annular wire portion (125a) and wherein the second electrically conducting wire (126) comprises a second annular wire portion (126a), the first and second annular portions (125a, 126a) being separated by the gap.

Example 7. The cooling system of example 6, wherein one of the first and second annular wire portions (125a, 126a) is arranged around the cooling conduit (102) and the other one of the first and second annular wire portions is arranged around the liquid coolant supply conduit (101), or around a connecting device (105) at which the joint (103) is provided.

Example 8. The cooling system of example 6 or 7, wherein the first and second annular wire portions (125a, 126a) are arranged such that the gap can be overbridged by the liquid coolant droplet (130) at any location around an outer circumference of the joint (103).

Example 9. The cooling system of any one of examples 2-8, wherein the discontinuity has a width of 0.1-6 mm, preferably 0.5-5 mm, more preferably 0.5-3 mm.

Example 10. The cooling system of any one of the preceding examples, wherein the liquid coolant has a higher electrical conductivity as measured at a temperature of 20°C than condensed water.

Example 11. The cooling system of any one of the preceding examples, wherein the liquid coolant comprises ethylene glycol.

Example 12. The cooling system of any one of the preceding examples, wherein the liquid coolant comprises a mixture of ethylene glycol and distilled water.

Example 13. The cooling system of any one of the preceding examples, wherein at least a portion of the electrically conducting device (121) is arranged in direct contact with an external surface of the joint (103).

Example 14. The cooling system of any one of the preceding examples, comprising a plurality of joints (103, 113), each joint (103, 113) providing a fluid connection between two fluid conduits of the cooling system (100), and wherein the monitoring circuit (120) is configured to individually detect leaks at each one of the joints (103, 113).

Example 15. The cooling system of example 14, wherein the monitoring circuit (120) comprises a plurality of electrically conducting devices (121, 127), each electrically conducting device being disposed externally of a respective one of the joints (103, 113), wherein the monitoring circuit (120) is configured to detect a leak of the liquid coolant at any one of the joints (103, 113) via the plurality of electrically conducting devices (121, 127).

Example 16. The cooling system of any one of the preceding examples, wherein the monitoring circuit (120) is configured to trigger an alarm signal in response to the detection of the leak.

Example 17. A battery pack (200) comprising the cooling system (100) of any one of the preceding examples, wherein the cooling conduit (102) is configured for cooling of at least one battery cell (201) of the battery pack (200).

Example 18. The battery pack according to example 17, comprising a plurality of battery cells (201), wherein the cooling system (100) comprises a plurality of cooling conduits (102), each cooling conduit (102) being configured for cooling of at least one battery cell (201) of the plurality of battery cells, and wherein each cooling conduit (102) is fluidly connected to the liquid coolant supply conduit (101) at a respective joint (103).

Example 19. A vehicle (1) comprising the battery pack (200) of example 17 or 18.

Example 20. The vehicle of example 19, wherein the vehicle (1) is a partly or fully electric vehicle.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cooling system (100) for a battery pack (200), the cooling system (100) comprising:
- a liquid coolant supply conduit (101),
- a cooling conduit (102) configured to carry a liquid coolant for cooling of the battery pack (200), wherein the cooling conduit (102) is configured to be fluidly connected to the liquid coolant supply conduit (101) at a joint (103), such that liquid coolant can pass between the liquid coolant supply conduit (101) and the cooling conduit (102) via an interior (104) of the joint (103), and
- a monitoring circuit (120) comprising an electrically conducting device (121) disposed externally of the joint (103), wherein the monitoring circuit (120) is configured to detect a leak of the liquid coolant at the joint (103) via the electrically conducting device (121).

2. The cooling system of claim 1, wherein the electrically conducting device (121) comprises a discontinuity (122) configured to be overbridged by a liquid coolant droplet (130) leaking from the joint (103).

3. The cooling system of claim 2, wherein the monitoring circuit (120) is configured such that, when no liquid coolant droplet (130) overbridges the discontinuity, the monitoring circuit (120) is open, and when the liquid coolant droplet (130) overbridges the discontinuity (122), the monitoring circuit (120) is closed.

4. The cooling system of claim 2 or 3, wherein the discontinuity (122) extends around an outer circumference of the joint (103) and is configured such that a liquid coolant droplet (10) leaking from any location of the joint (103) around the outer circumference will overbridge the discontinuity (122).

5. The cooling system of any one of claims 2-4, wherein the electrically conducting device comprises a first electrically conducting wire (125) electrically connected to a first terminal (123) of the monitoring circuit (120), and a second electrically conducting wire (126) connected to a second terminal (124) of the monitoring circuit (120), and wherein the discontinuity (122) is a gap between the first electrically conducting wire (125) and the second electrically conducting wire (126).

6. The cooling system of claim 5, wherein the first electrically conducting wire (125) comprises a first annular wire portion (125a) and wherein the second electrically conducting wire (126) comprises a second annular wire portion (126a), the first and second annular portions (125a, 126a) being separated by the gap.

7. The cooling system of claim 6, wherein the first and second annular wire portions (125a, 126a) are arranged such that the gap can be overbridged by the liquid coolant droplet (130) at any location around an outer circumference of the joint (103).

8. The cooling system of any one of claims 2-7, wherein the discontinuity has a width of 0.1-6 mm, preferably 0.5-5 mm, more preferably 0.5-3 mm.

9. The cooling system of any one of the preceding claims, wherein the liquid coolant comprises ethylene glycol.

10. The cooling system of any one of the preceding claims, wherein at least a portion of the electrically conducting device (121) is arranged in direct contact with an external surface of the joint (103).

11. The cooling system of any one of the preceding claims, comprising a plurality of joints (103, 113), each joint (103, 113) providing a fluid connection between two fluid conduits of the cooling system (100), and wherein the monitoring circuit (120) is configured to individually detect leaks at each one of the joints (103, 113).

12. The cooling system of claim 11, wherein the monitoring circuit (120) comprises a plurality of electrically conducting devices (121, 127), each electrically conducting device being disposed externally of a respective one of the joints (103, 113), wherein the monitoring circuit (120) is configured to detect a leak of the liquid coolant at any one of the joints (103, 113) via the plurality of electrically conducting devices (121, 127).

13. The cooling system of any one of the preceding claims, wherein the monitoring circuit (120) is configured to trigger an alarm signal in response to the detection of the leak.

14. A battery pack (200) comprising the cooling system (100) of any one of the preceding claims, wherein the cooling conduit (102) is configured for cooling of at least one battery cell (201) of the battery pack (200).

15. A vehicle (1) comprising the battery pack (200) of claim 14.
